# FASCICULE DE BREVET EUROPEEN

(11) **EP 1 458 061 B1**
(45) Date de publication et mention de la délivrance du brevet: **05.01.2011**
(21) Numéro de dépôt: 04290551.3
(22) Date de dépôt: 01.03.2004
(51) Int. Cl.: H01R 13/658, F21V 19/00

(54) **Dispositif de blindage pour une connexion entre un projecteur et un module complémentaire**
Abschirmvorrichtung für eine Verbindung zwischen einem Scheinwerfer und einem komplimentären Modul
Screening device for a connection between a headlamp and a complimentary module

(30) Priorité: 14.03.2003 FR 0303212
(43) Date de publication de la demande: 15.09.2004
(73) Titulaire: VALEO VISION, 93012 Bobigny Cedex (FR)
(72) Inventeur: Duarte, Marc, 93250 Villemomble (FR); Nicolai, Jean-Marc, 92400 Courbevoie (FR); Myotte, David, 93360 Neuilly Plaisance (FR)
(74) Mandataire: Tran, Chi-Hai

(56) Documents cités:
- DE-A- 19 654 190
- FR-A- 2 769 072
- US-A- 5 529 506
- US-A1- 2001 030 877
- US-A1- 2002 067 619
- US-A1- 2002 155 738

## Description

La présente invention a pour objet un dispositif de blindage qui permet d'assurer une continuité électrique du blindage, visant à diminuer le rayonnement électromagnétique, d'un dispositif projecteur, notamment au niveau d'une connexion entre un élément projecteur et un module complémentaire du dispositif projecteur. Elle concerne donc les dispositifs projecteurs qui comprennent un élément projecteur et un module complémentaire destiné à venir se fixer sur - ou dans - ledit élément projecteur, et qui comportent une liaison électrique devant relier le module complémentaire et l'élément projecteur.

Un dispositif projecteur selon le préambule de la revendication 1 est connu du document US-A1-2002/0067619.

L'invention a essentiellement pour but d'assurer de façon continue un blindage pour un faisceau électrique reliant, dans une solution particulière d'association de ces deux éléments, l'élément projecteur et le module complémentaire; cette solution d'association présente des avantages, notamment en terme de facilité d'assemblage de l'élément projecteur avec le module complémentaire, et accessoirement en terme d'encombrement du module complémentaire lorsqu'il est assemblé avec l'élément projecteur, ou encore en terme de simplicité des moules utilisés dans la réalisation de l'élément projecteur. Par blindage d'un faisceau électrique, on désigne une protection disposée sur un faisceau électrique qui permet de limiter les rayonnements électromagnétiques de ce faisceau de façon à satisfaire les différentes normes en vigueur, notamment la norme CEM (pour Compatibilité Electromagnétique).

Le domaine de l'invention est, d'une façon générale, celui des projecteurs de véhicule automobile. Dans ce domaine, on connaît différents types de projecteurs, parmi lesquels on trouve essentiellement :
- des feux de position, d'intensité et de portée faible ;
- des feux de croisement, ou codes, d'intensité plus forte et de portée sur la route avoisinant 70 mètres, qui sont utilisés essentiellement la nuit et dont la répartition du faisceau lumineux est telle qu'elle permet de ne pas éblouir le conducteur d'un véhicule croisé ;
- des feux de route longue portée, et des feux de complément de type longue portée, dont la zone de vision sur la route avoisine 200 mètres, et qui doivent être éteints lorsque l'on croise un autre véhicule afin de ne pas éblouir son conducteur ;

- des projecteurs perfectionnés, dits bimodes, qui cumulent les fonctions de feux de croisement et de feu de route en incorporant un cache amovible ;
- des feux anti-brouillard.

Le dispositif selon l'invention peut concerner l'un quelconque de ces projecteurs. Par ailleurs, le module complémentaire intervenant dans le dispositif selon l'invention peut comporter un ensemble d'éléments électriques et/ou électroniques et/ou mécaniques destinés directement au fonctionnement du projecteur ou au fonctionnement de fonctions accessoires et/ou complexes associées au projecteur. Plus particulièrement, le module complémentaire peut, par exemple :
- soit contenir une carte électronique de type carte LCS ( Light Control System en anglais, pour système de contrôle de l'éclairage), qui sert à la gestion de la mise en oeuvre de fonctions dites complexes (FBL, DBL, DRL, Cordy...) pour le projecteur auquel cette carte électronique est associée ;
- soit comporter une carte de contrôle pour piloter un élément mécanique de type actionneur ;
- soit être un ballast ; un ballast est un module complémentaire particulier destiné de préférence à être intégré dans un dispositif projecteur de type feu de croisement utilisant comme source lumineuse une lampe à décharge. On trouve notamment des ballasts de type système Xénon, fréquemment appelé HID (High Intensity Décharge en anglais, pour décharge de haute intensité), qui sont nécessaires pour créer et maintenir en vigueur un arc électrique utilisé dans les lampes à xénon. Un module électronique crée une haute tension au sein du ballast pour obtenir l'arc électrique au niveau de la source lumineuse utilisée. Dans ce type de projecteur, un module complémentaire de type ballast est donc indispensable pour fournir l'énergie nécessaire au bon fonctionnement du projecteur. L'invention sera plus particulièrement décrite, à titre d'exemple uniquement, dans le cadre d'un dispositif projecteur de type feu de croisement avec un module complémentaire de type ballast.

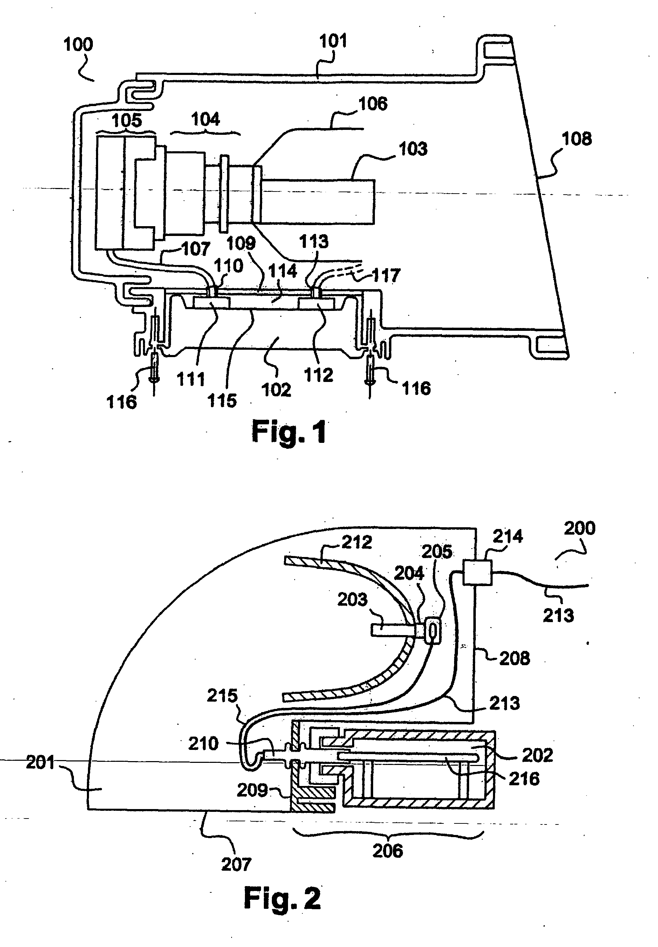

Dans l'état de la technique, on connaît des dispositifs projecteurs qui proposent une solution d'assemblage entre un élément projecteur et un module complémentaire. Un tel dispositif projecteur est illustré de façon schématique à la figure 1.

Sur cette figure, un dispositif projecteur 100 est essentiellement composé d'un élément projecteur 101 et d'un ballast 102 de type HID. Dans l'élément projecteur 101, on trouve notamment un réflecteur 106 dans lequel on a placé une source lumineuse 103, de type lampe à décharge. La source lumineuse 103 produit un faisceau lumineux qui sort de l'élément projecteur 101 au niveau d'une surface de sortie 108, qui constitue la partie avant de l'élément projecteur 101. La source lumineuse 103, qui repose sur un élément porte-lampe 104, est connectée à un module haute tension 105 servant à l'alimenter

Le module haute tension est alimenté au moyen d'un première liaison électrique 107, constituant un faisceau de sortie, qui est blindée et qui sort de l'élément projecteur 101 au niveau d'une première ouverture, ménagée dans une face inférieure 109 de l'élément projecteur 101, dans laquelle on a disposé une première contre-partie 110 de connecteur. Cette première contre-partie 110 est destinée à recevoir un premier connecteur 111 du ballast 102. Ce dernier comporte un deuxième connecteur 112, associé à une deuxième contre-partie 113 de connecteur disposée au niveau d'une deuxième ouverture ménagée dans la face inférieure 109 de l'élément projecteur 101. Une deuxième liaison électrique non blindée 117, constituant un faisceau d'entrée, est reliée au deuxième connecteur 112; elle permet d'acheminer différents signaux électriques, notamment un signal d'alimentation du ballast et différents signaux de contrôle provenant du véhicule.

La solidarisation entre le ballast 102 et l'élément projecteur 101 s'effectue entre la face inférieure 109 de l'élément projecteur 101 et une face supérieure 115 du ballast 102, au niveau d'un évidement 114 ménagé dans au moins une partie de la face inférieure et de la face arrière de l'élément projecteur 101, c'est à dire approximativement sous l'ensemble constitué par le réflecteur 106, l'élément porte-lampe 104 et le module haute tension 105. Le ballast 102 est fixé sur l'élément projecteur 101 au moyen d'au moins deux vis 116 qui viennent se disposer verticalement dans des ouvertures prévues à cet effet.

Le choix de la disposition du ballast 102 s'effectue notamment en considérant la zone la moins chaude du dispositif projecteur. Généralement, cette zone correspond à la zone située sous l'élément réflecteur 101, qui par ailleurs est assez accessible et facilite en conséquence le montage: c'est à cet endroit que la chaleur produite par la source de lumière 103 est la moins importante, et la partie inférieure de l'élément projecteur 101 est plus facile d'accès que, par exemple, la partie arrière.

Cependant, une intégration optimale d'un module complémentaire au sein du dispositif projecteur doit se faire en respectant un ensemble de contraintes :
- elle doit se faire au moyen d'une opération d'assemblage aussi simple que possible ;
- elle doit être peu encombrante;
- afin d'éviter tout endommagement des éléments contenus dans le ballast, elle doit tenir compte des fortes températures qui peuvent apparaître lors du fonctionnement du dispositif projecteur ;
- elle doit prendre en compte la nécessité des transmissions de signaux électriques entre les différents éléments du dispositif projecteur ;
- l'association entre l'élément projecteur et le module complémentaire ne doit pas entraîner de problèmes d'étanchéité pour l'une quelconque de ces pièces.

Or l'assemblage entre l'élément projecteur et le module complémentaire tel qu'il est représenté à la figure 1 ne respecte pas ces contraintes:

Tout d'abord, le fait que les contre-parties de connecteur 110 et 113 soient disposées verticalement sur la face arrière 109 de l'élément projecteur 101 pose un premier problème: en effet, le moule qui sert à fabriquer l'élément projecteur 101 s'ouvre selon une direction horizontale, et la nécessité de pouvoir disposer des contre-parties de connecteur verticales impose la présence de tiroirs dans le moule utilisé. La présence de deux connecteurs est également un problème en soi ; en effet, plus le nombre de connecteurs est important, plus le montage est délicat et long à réaliser. Un troisième problème est que les dispositifs projecteurs représentés sont relativement encombrants, le module complémentaire 102 ayant une hauteur importante. Un quatrième problème réside dans la complexité de l'opération de montage, notamment en raison des moyens de fixation utilisés: dans l'état de la technique décrit, on doit utiliser au moins deux vis pour solidariser l'élément projecteur 101 et le ballast 102. Plus le nombre de vis est limité, meilleure est la durée et la simplicité de montage.

Pour répondre aux problèmes qui viennent d'être exposés, on a récemment proposé une solution d'association entre un élément projecteur associé avec un module complémentaire dont un exemple de réalisation est représenté à la figure 2. Cette solution présente notamment la particularité de présenter un unique connecteur pour assurer les différentes connexions entre les différentes liaisons électriques intervenant. La figure 2 montre un dispositif 200 en section verticale, qui est composé notamment d'un élément projecteur 201 et d'un module complémentaire 202 de type ballast HID, qui peut notamment comporter une carte de contrôle électronique 216. Comme à la figure 1, on trouve, dans l'élément projecteur 201, notamment un réflecteur 212 dans lequel on a placé une source lumineuse 203, de type lampe à décharge. La source lumineuse 203 produit un faisceau lumineux qui sort de l'élément projecteur 201 au niveau d'une surface de sortie 208, qui constitue la partie avant de l'élément projecteur 201. La source lumineuse 203, qui repose sur un élément porte-lampe 204, est connectée à un module haute tension 205 servant à l'alimenter.

Un évidement 206 est, par exemple, ménagé dans au moins une partie d'une surface inférieure 207 et une partie 209 d'une surface arrière 208 de l'élément projecteur 201, les orientations de ces surfaces étant définies en considérant le dispositif projecteur dans une position de fonctionnement habituel sur un véhicule automobile, la surface de sortie du faisceau lumineux constituant la face avant de l'élément projecteur.

Dans le dispositif projecteur 200, on a cherché à limiter l'encombrement lié à l'ajout du module complémentaire de type ballast 202. Ainsi, on dispose, par exemple par clipsage et avec un peu de jeu, un connecteur unique 210, comme représenté à la figure 2, sur la partie arrière 209 de l'élément projecteur 201 qui se situe au niveau de l'évidement 206. La jonction du connecteur 210 avec une zone de contact appropriée du module complémentaire peut ainsi se faire selon un plan vertical, dit plan de contact ou plan de jonction, c'est à dire en déplaçant le ballast 202 selon une direction horizontale vers l'élément projecteur 201, et non plus une direction verticale comme c'était le cas dans l'exemple décrit à la figure 1. L'encombrement dans le sens de la hauteur, qui était auparavant du à la présence de plusieurs contre-parties de connecteur et de connecteurs dans un plan de jonction horizontal, a disparu. Avec une telle nouvelle disposition, la hauteur globale d'un dispositif projecteur comportant un module complémentaire diminue avantageusement. Eventuellement, l'évidement 206 est légèrement prolongé horizontalement, c'est à dire qu'il avance un peu plus sous le réflecteur 212.

Cependant, un dispositif projecteur tel que celui représenté à la figure 2 pose une difficulté de réalisation au niveau de la connexion électrique. En effet, il faut faire coexister, au niveau d'une unique zone de connexion, différentes liaisons électriques, dont certaines véhiculent des signaux susceptibles de perturber, par des interférences électromagnétiques, d'autres signaux:
- une première liaison 213 véhicule un premier ensemble de signaux d'alimentation et de contrôle depuis l'extérieur du dispositif projecteur 200 jusqu'au ballast 202. Cette première liaison électrique 213 entre dans l'élément projecteur 201 au niveau d'une ouverture 214 pour aller se brancher sur le connecteur 210. Ces signaux sont des signaux basse tension, du niveau de la batterie du véhicule; les signaux sont filtrés par ailleurs pour ne pas être bruyants ;
- une deuxième liaison 215 véhicule, depuis le connecteur 210 vers le module haute tension 205, un deuxième ensemble de signaux, qui sont des signaux d'alimentation de la source lumineuse 203. Ces signaux sont produits par le ballast 202 à partir du premier ensemble de signaux qui ont subi un traitement au sein du ballast.

Ces derniers signaux sont dits de moyenne tension ; ils ont typiquement une amplitude maximale de mille volts. Ils ont un rayonnement électromagnétique important qui peut notamment interférer avec le premier ensemble de signaux et différents signaux de contrôle exploités par la carte électronique 216, les différents signaux étant directement voisins au moins au niveau du connecteur 210. En effet, même si la liaison 215 est blindée, le connecteur 210 auquel elle est raccordée n'est, dans l'état de la technique, pas blindé. Il est donc nécessaire de trouver une solution pour éviter ces interférences qui naissent au niveau du connecteur 210. Une solution proposée dans l'état de la technique est de disposer différents filtres sur la carte électronique 216 et/ou des ferrites dans le ballast 202 et/ou autour du faisceau. Une telle solution pose cependant un problème de coût et complique la fabrication du ballast 202.

C'est un objet de la présente invention de répondre à ce problème. D'une façon générale, on propose dans l'invention un dispositif de blindage faisant notamment intervenir un connecteur, sur lequel sont raccordées d'une part une liaison véhiculant des signaux faiblement perturbateurs en terme de rayonnement électromagnétique, et d'autre part une liaison véhiculant des signaux rayonnant suffisamment pour perturber des signaux voisins, ledit connecteur assurant le blindage, en terme de rayonnement électromagnétique, de la deuxième liaison jusqu'au niveau de ses contacts disposés dans le connecteur. Si l'invention fait essentiellement référence à une disposition du module complémentaire 202 telle que représentée à la figure 2, elle est directement applicable à l'ensemble des dispositifs projecteurs équipés d'un module complémentaire destinés à être associés avec un élément projecteur, et pour lesquels la connexion électrique entre ces deux éléments s'effectue au moyen d'un connecteur unique.

A cet effet, dans l'invention, on propose essentiellement d'incorporer dans le connecteur unique un élément de blindage destiné à venir entourer uniquement des zones de contact permettant la connexion avec un faisceau blindé. Dans un exemple particulier de réalisation du dispositif selon l'invention, la carte électronique est directement encastrable dans le connecteur partiellement blindé, c'est à dire qu'elle présente un ensemble de zones de contact sur sa superficie qui sont directement accessibles par les différentes zones de contact du connecteur lorsque la carte électronique est emboîtée dans le connecteur. Dans ce cas, il n'est pas indispensable de blinder les différentes zones de contact de la carte électronique.

L'invention concerne donc essentiellement un dispositif projecteur comportant au moins un module complémentaire recevant un ensemble de signaux via une première liaison électrique, et un élément projecteur comprenant au moins un élément générateur de perturbations électromagnétiques, chaque élément générateur de perturbations électromagnétiques étant alimenté via une liaison électrique complémentaire distincte, la première liaison électrique et chaque liaison électrique complémentaire étant raccordées à un connecteur unique, **caractérisé en ce que** le connecteur comporte une premier ensemble de zones de contact de la première liaison électrique et au moins un ensemble de zones de contact complémentaires, chaque ensemble de zones de contact complémentaires étant destiné à recevoir une des liaisons électriques complémentaires, seuls les ensemble de zones de contact complémentaires étant entourés séparément par un élément de blindage électromagnétique.

Le dispositif projecteur selon l'invention peut, en plus des caractéristiques principales mentionnées dans le paragraphe précédent, présenter une ou plusieurs des caractéristiques secondaires suivantes :
- chaque élément de blindage est constitué de deux demi coquilles , notamment embouties l'une dans l'autre, ou de plusieurs coquilles ou encore d'une seule coquille..
- chaque élément de blindage est fixé à une tresse ou gaine métallique blindée ou à un câble blindé pour constituer un faisceau blindé contenant la liaison électrique complémentaire reçue par l'ensemble de zones de contact complémentaire entouré par ledit élément de blindage.
- la fixation entre l'élément de blindage et la tresse métallique blindée ou le câble blindé est réalisée au moyen d'une férule.
- le connecteur est constitué d'un boîtier plastique comportant au moins une pièce notamment en plastique ou à base de plastique dans laquelle sont moulées des cavités destinées à recevoir un des ensembles de zones de contact complémentaires et une extrémité d'une des liaisons électriques complémentaire, chaque pièce en plastique étant entourée par un des éléments de blindage; chaque élément de blindage peut alors être dissociable du boîtier plastique, accompagné de la pièce en plastique.
- le connecteur est constitué d'un boîtier plastique dans l'épaisseur duquel est disposé chaque élément de blindage, et dans lequel sont moulées des cavités destinées à recevoir les ensembles de zones de contact complémentaires et une extrémité des liaisons électriques complémentaires.
- le dispositif projecteur comporte un élément de contact pour assurer une continuité du blindage entre chaque élément de blindage et la liaison électrique complémentaire reçue par l'ensemble de zones de contact complémentaire entouré par ledit élément de blindage.
- l'élément générateur de perturbations électromagnétiques est une source lumineuse, et en ce que l'élément de contact relie un signal de masse présent sur une piste d'une carte électronique du module complémentaire, et un fil au moins partiellement dénudé à l'intérieur de la liaison électrique complémentaire alimentant la source lumineuse, ledit fil atteignant une extrémité de la liaison électrique complémentaire alimentant la source lumineuse, ladite extrémité étant située à proximité de la source lumineuse.
- l'élément de contact relie un signal de masse présent sur une piste d'une carte électronique du module complémentaire, et un fil au moins partiellement dénudé à l'intérieur de la liaison électrique complémentaire, ledit fil étant fixé entre la férule et la tresse métallique.
- l'élément de contact assure la mise en contact entre un élément métallique de blindage et un élément à la masse électrique d'un module électronique du module complémentaire.
- chaque élément de blindage coopère avec un deuxième élément de blindage additionnel disposé sur une contre-partie de connecteur destinée à recevoir le connecteur, de telle sorte qu'une continuité du blindage de chaque liaison électrique complémentaire est assurée au niveau de zones de contact de la contre-partie de connecteur.
- le connecteur est disposé à la superficie, c'est à dire à travers ou sur le boîtier renfermant l'élément projecteur, ou encore à l'intérieur de l'élément projecteur.
- le ou au moins un des éléments générateurs de perturbations électromagnétiques est choisi parmi une source lumineuse, un ballast, une carte électronique du type LCS. On peut par exemple avoir deux sources lumineuses qui seront traitées selon l'invention. On peut dans ce cas n'avoir qu'un seul module pour les deux lampes

Un autre objet de l'invention est un véhicule automobile équipé d'un dispositif projecteur, présentant les caractéristiques principales qui ont été précisées, avec éventuellement au moins une des caractéristiques secondaires qui viennent d'être mentionnées.

L'invention et ses différentes applications seront mieux comprises à la lecture de la description qui suit et à l'examen des figures qui l'accompagnent. Celles-ci ne sont présentées qu'à titre indicatif et nullement limitatif de l'invention. En particulier, l'exemple de réalisation de l'invention illustré sur les figures montre un dispositif projecteur dans lequel l'élément générateur de perturbations électromagnétiques est une source lumineuse. D'une façon plus générale, l'invention concerne l'ensemble des dispositifs projecteurs comprenant un élément générateur de perturbations électromagnétiques, que ce dernier soit une source lumineuse, un moteur ou tout autre élément intervenant dans le cadre d'un dispositif projecteur et nécessitant la présence d'un blindage.

De même, l'exemple dé réalisation de l'invention illustré sur les figures montre un dispositif projecteur dans lequel on limite le nombre d'éléments générateurs de perturbations électromagnétiques à la seule source lumineuse, mais l'exemple illustré est facilement généralisable à un dispositif projecteur comportant plusieurs éléments générateurs de perturbations électromagnétique, chacun de ces éléments faisant alors l'objet d'un blindage électromagnétique distinct notamment au niveau du connecteur unique.

Les figures montrent :
- à la figure 1, déjà décrite, une représentation d'une association entre un dispositif projecteur et un module complémentaire dans l'état de la technique ;
- à la figure 2, une représentation schématique d'une vue en coupe d'une association entre un dispositif projecteur et un module complémentaire susceptible d'incorporer le dispositif de blindage selon l'invention;
- à la figure 3, une première vue en perspective d'un connecteur intervenant dans un exemple de réalisation du dispositif de blindage selon l'invention ;
- à la figure 4, une deuxième vue en perspective d'un connecteur intervenant dans un exemple de réalisation du dispositif de blindage selon l'invention;
- à la figure 5, une vue en perspective d'un élément de blindage intervenant dans un exemple de réalisation du dispositif de blindage selon l'invention.

Sur les différentes figures, les éléments qui sont communs à plusieurs figures auront conservé les mêmes références.

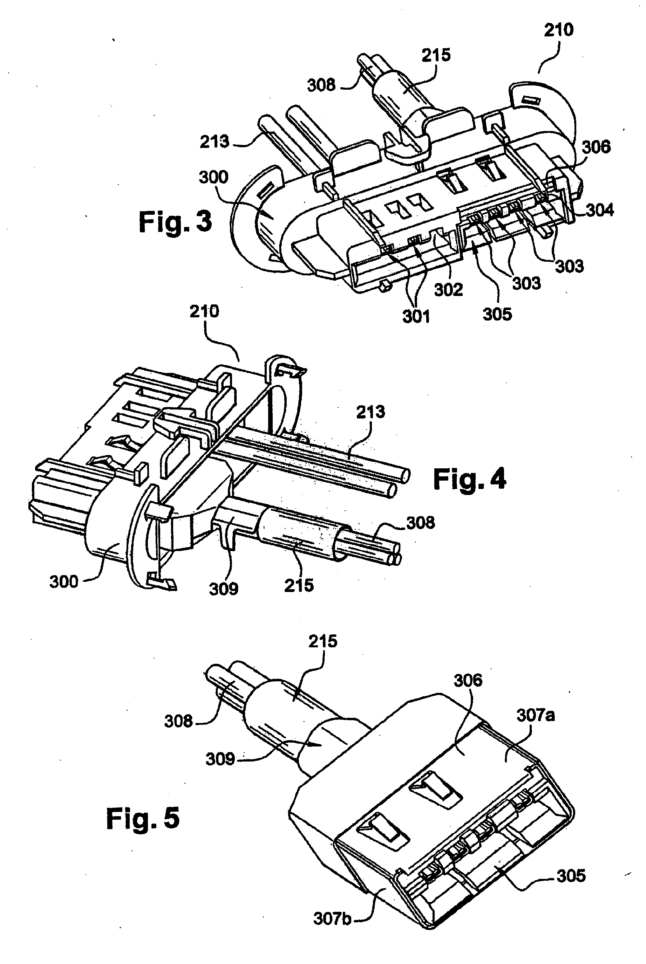

Aux figures 3 et 4, on a représenté le connecteur 210 en perspective, respectivement vu de face et vu de derrière, tel qu'il est proposé dans le dispositif de blindage selon l'invention. Elles sont décrites également en référence à la figure 5, qui est une représentation d'un élément du connecteur 210, qui intervient plus particulièrement dans le dispositif de blindage selon l'invention. Le connecteur 210 est délimité par un boîtier en plastique 300 présentant des ouvertures sur sa face avant et sa face arrière. La première liaison 213, qui était déjà visible à la figure 2, est représentée sous la forme de deux fils cylindriques, chacun des fils véhiculant un ensemble de signaux électriques particuliers, qui pénètrent dans le connecteur au niveau de sa face arrière. Ces deux fils véhiculent notamment des signaux d'alimentation fournis par la batterie du véhicule et différents signaux de contrôle destinés au fonctionnement du module complémentaire 202. Ces signaux sont des signaux basse tension dont l'amplitude correspond à celle de la batterie du véhicule. Leur rayonnement électromagnétique est donc faible et ne provoque pas d'interférences sur les liaisons électriques voisines. Un blindage électromagnétique de cette liaison n'est donc pas nécessaire.

Les deux fils 213 sont terminés par un premier ensemble de zones de contact 301 accessibles depuis la face avant du connecteur 210. Les zones de contact sont disposées dans un premier ensemble de cavités 302 ménagées directement dans le boîtier en plastique 300. Ces zones de contact sont destinées à être touchées par des zones de contact associées présentes au sein du module complémentaire 202. Un deuxième ensemble de zones de contact 303 est disposé dans un deuxième ensemble de cavité 304.

Le deuxième ensemble de cavités 304 peut être soit directement ménagé dans le boîtier en plastique 300, soit dans une pièce en plastique intermédiaire 305. Dans le premier cas, un élément de blindage 306 est incorporé dans l'épaisseur du boîtier en plastique 300 de façon à entourer latéralement le deuxième ensemble de zones de contact et l'aboutissement d'un deuxième ensemble de fils conducteurs 308 constituant une liaison électrique complémentaire, désigné dans l'exemple illustré comme deuxième liaison électrique 215, qui est un faisceau blindé, déjà visible à la figure 2. Dans le deuxième cas, qui correspond à l'exemple représenté sur les figures 3 à 5, l'élément de blindage 306, plus particulièrement visible à la figure 5, entoure la pièce en plastique intermédiaire 305. L'exemple de réalisation correspondant au deuxième cas présente l'avantage que le faisceau blindé 215 est amovible ; il peut aisément être extrait dans sa totalité du boîtier en plastique 300. Dans les cas où plusieurs éléments générateurs de perturbations électromagnétiques sont présents au sein du dispositif projecteur selon l'invention, on prévoit des éléments de blindage, du type de l'élément de blindage 306, chacun des éléments de blindage étant amovible indépendamment des autres éléments de blindage. La structure et les connexions des différents éléments de blindage, quand plusieurs sont disposés dans le boîtier plastique 300 sont identiques à celles décrites pour l'élément de blindage 306. Chacun des éléments de blindage peut être retiré séparément du boîtier plastique 300. On peut aussi prévoir que certains seulement de ces éléments de blindage soient amovibles, et non pas tous.

L'élément de blindage 306 peut par exemple être composé de deux demi coquilles métalliques 307-a et 307-b qui sont découpées et embouties de façon à assurer l'étanchéité du blindage au niveau du deuxième ensemble de zones de contact 303. Dans un autre exemple de réalisation, l'élément de blindage est réalisé en une pièce unique métallique découpée et pliée de façon à assurer l'étanchéité du blindage. Il est muni de deux éléments de liaison conducteurs de type ressorts, qui vont assurer la continuité de blindage entre le moyen de blindage 306 et le module complémentaire 202

Le faisceau blindé 215 peut être constitué soit par un câble blindé, soit par une tresse ou gaine métallique qui entoure, sur toute leur longueur, le deuxième ensemble de fils conducteurs 308. Celui-ci est typiquement composé de trois fils d'alimentation de la source lumineuse ; dans un premier exemple, un premier fil étant porté à un potentiel d'environ 600 volts, un deuxième fil étant porté à un potentiel d'environ -400 volts, et le dernier ayant un potentiel nul ; dans un deuxième exemple, correspondant au cas où le module complémentaire comporte un moteur basse tension, les potentiels observés sont de l'ordre de plus ou moins 12 volts. Les caractéristiques électriques des signaux conduits dans ces fils conducteurs nécessitent bien un blindage pour ne pas créer d'interférences électromagnétiques sur la première liaison conductrice 213 par exemple. La tresse métallique ou le câble blindé constituant le faisceau blindé 215 est, dans un exemple de réalisation, fixé sur l'élément de blindage 306 au moyen d'une férule 309.

La continuité du blindage entre le faisceau blindé 215 et l'élément de blindage 306 peut être réalisé de différentes façons :
- soit en utilisant une piste de la carte électronique 216 visible à la figure 2, ladite piste étant connectée à la masse de la carte électronique 216, en reliant ladite piste et un fil conducteur au moins partiellement dénudé à l'intérieur du faisceau blindé reliant soit l'autre extrémité du faisceau blindé, à proximité de la source lumineuse 203, soit la tresse métallique ou le câble blindé en étant fixé, par exemple, au niveau de la férule 309.
- soit par contact entre l'un des éléments métalliques de blindage, c'est à dire une demi coquille 307-a ou 307-b, la férule 309, la tresse ou le câble blindé, et la masse électrique du module électronique qui crée une haute tension au sein du ballast 202. La mise en contact peut être réalisée au moyen d'une pièce spécifique, par exemple une griffe qui est ajoutée au dispositif de blindage.

Les différentes zones de contact 301 et 303 représentées comportent des palpeurs ; un palpeur est un élément de connexion électrique composé d'un ou plusieurs éléments conducteurs de type patte métallique, légèrement déformable pour laisser glisser sans trop de résistance un support, comportant un ensemble de zones de contact, dans une ouverture dans laquelle ledit palpeur est disposé ; la déformation du palpeur est élastique de telle sorte qu'il demeure appuyé sur la zone du support au niveau de laquelle il se trouve, ladite zone correspondant de préférence à une zone de contact du support. Les zones de contact 301 et 303 sont donc particulièrement adaptées pour recevoir des zones de contact directement disposées sur la superficie de la carte électronique 216 contenue dans le module électronique 202. Les zones de contact de la carte électronique 216 s'insèrent ainsi directement dans les différents cavités 302 et 304. Il n'est alors pas indispensable de prévoir de dispositif de blindage particulier du côté du module électronique 202.

Dans d'autres modes de réalisation, où le module complémentaire 202 se connecte sur le connecteur 210 au moyen d'une contre-partie de connecteur, il est prévu, dans un premier exemple de réalisation de l'invention, de blinder électromagnétiquement, par exemple au moyen d'un élément de blindage 306 similaire à celui présent dans le connecteur 210, les zones de contact de la contre-partie de connecteur qui sont destinées à être associées avec les zones de contact blindées 303 du connecteur 210. Dans un deuxième exemple de réalisation, on prolonge l'élément de contact 306 hors du boîtier 300 de façon à ce qu'il entoure les zones de contact à blinder de la contre-partie de connecteur lorsque cette dernière reçoit le connecteur 210.

Selon l'invention, on peut prévoir des moyens assurant la continuité électrique entre les moyens de blindage (306) et le module complémentaire (202), notamment des moyens élastiques de type ressort.

On peut aussi prévoir des moyens assurant la continuité électrique entre le module complémentaire (202) et une carte électronique (216) contenue dans ledit module. On assure ainsi al continuité du blindage jusqu'à la masse, puisque le module complémentaire est monté de façon à être à la masse.

En conclusion, l'invention a donc permis de rassembler dans un connecteur unique une pluralité de zones de contact électrique (les zones de contact d'entrée, les zones de contact de sortie, et éventuellement d'autres zones de contact pour d'autres fonctions), notamment toutes celles nécessaires, et d'effectuer un blindage « sélectif » : selon l'invention : on ne blinde qu'une partie de ces contacts. Deux intérêts majeurs à ce choix :
- d'une part, on ne blinde que les zones qu'il faut effectivement blinder,
- d'autre part, on peut ainsi éviter que des zones de contact différentes ne se perturbent mutuellement sur le plan électro-magnétique, ce qui risquerait d'être le cas si elles étaient rassemblées au sein d'un même blindage

Concrètement, en reprenant l'exemple selon l'invention représenté en figures 3 à 5, si le moyen de blindage entourait toutes les zones de contact électrique, et pas seulement les zones 303, un tel connecteur ne répondrait plus aux normes CEM en vigueur, ce qui obligerait à ajouter, par exemple, des fonctions électroniques supplémentaires de filtrage sur la carte électronique.

On a ainsi un blindage sélectif plus efficace, et que l'on peut rendre standard, d'un modèle de projecteur à un autre.

## Revendications

1. Dispositif projecteur comportant au moins un module complémentaire (202) recevant un ensemble de signaux via une première liaison électrique (213), et un élément projecteur (201) comprenant au moins un élément générateur de perturbations électromagnétiques (203), au moins un des éléments générateurs de perturbations électromagnétiques (203) étant alimenté via une liaison électrique complémentaire distincte (215), la première liaison électrique (213) et chaque liaison électrique complémentaire (215) étant raccordées à un connecteur unique (210), **caractérisé en ce que** le connecteur (210) comporte un premier ensemble de zones de contact (301) de la première liaison électrique (213) et au moins un ensemble de zones de contact complémentaires (303), chaque ensemble de zones de contact complémentaires (303) étant destiné à recevoir une des liaisons électriques complémentaires (215), le premier ensemble de zones de contact (301) de la première liaison électrique (213) et/ou au moins un des ensemble(s) de zones de contact complémentaires (303) étant entouré(s), séparément des autres zones de contact, par des moyens de blindage électromagnétique (306).

2. Dispositif projecteur selon la revendication 1, **caractérisé en ce que** le connecteur (210) comporte une premier ensemble de zones de contact (301) de la première liaison électrique (213) et au moins un ensemble de zones de contact complémentaires (303), chaque ensemble de zones de contact complémentaires (303) étant destiné à recevoir une des liaisons électriques complémentaires (215), seuls les ensemble de zones de contact complémentaires (303) étant entourés séparément par un ou plusieurs élément(s) de blindage électromagnétique (306).

3. Dispositif projecteur selon l'une des revendications précédentes, **caractérisé en ce que** le connecteur (210) est reliée électriquement à une carte électronique (216) d'un module complémentaire (202).

4. Dispositif projecteur selon l'une des revendications précédentes, **caractérisé en ce que** chaque élément de blindage (306) est constitué de deux ou plusieurs demi coquilles (307-a ;307-b), notamment embouties l'une dans l'autre, ou d'une seule coquillle.

5. Dispositif projecteur selon l'une au moins des revendications précédentes **caractérisé en ce que** chaque élément de blindage (306) est fixé à une tresse ou gaine métallique blindée ou à un câble blindé pour constituer un faisceau blindé contenant la liaison électrique complémentaire (215) reçue par l'ensemble de zones de contact complémentaire entouré par ledit élément de blindage (306).

6. Dispositif projecteur selon l'une au moins des revendications précédentes **caractérisé en ce que** la fixation entre l'élément de blindage (306) et la tresse/gaine métallique blindée ou le câble blindé est réalisée au moyen d'une férule (309).

7. Dispositif projecteur selon l'une au moins des revendications précédentes **caractérisé en ce que** le connecteur (210) est constitué d'un boîtier plastique (300) comportant au moins une pièce notamment plastique (305) dans laquelle sont moulées des cavités (304) destinées à recevoir un des ensembles de zones de contact complémentaires (303) et une extrémité d'une des liaisons électriques complémentaire (215), chaque pièce (305) étant entourée par un des éléments de blindage (306).

8. Dispositif projecteur selon la revendication précédente **caractérisé en ce que** chaque élément de blindage (306) est dissociable du boîtier notamment plastique (300).

9. Dispositif projecteur selon l'une au moins des revendications 1 à 6 **caractérisé en ce que** le connecteur (210) est constitué d'un boîtier, notamment plastique (300) dans l'épaisseur duquel est disposé chaque élément de blindage (306), et dans lequel sont moulées des cavités (304) destinées à recevoir les ensembles de zones de contact complémentaires (303) et une extrémité des liaisons électriques complémentaires (215).

10. Dispositif projecteur selon l'une au moins des revendications précédentes **caractérisé en ce qu'**il comporte un élément de contact pour assurer une continuité du blindage entre chaque élément de blindage (306) et la liaison électrique complémentaire (215) reçue par l'ensemble de zones de contact complémentaire entouré par ledit élément de blindage (306).

11. Dispositif projecteur selon la revendication précédente **caractérisé en ce que** l'élément générateur de perturbations électromagnétiques ou l'un d'entre eux s'il y en a plusieurs (203) est une source lumineuse, et **en ce que** l'élément de contact relie un signal de masse présent sur une piste d'une carte électronique (216) du module complémentaire (202), et un fil au moins partiellement dénudé à l'intérieur de la liaison électrique complémentaire (215) alimentant la source lumineuse, ledit fil atteignant une extrémité de la liaison électrique complémentaire (215) alimentant la source lumineuse, ladite extrémité étant située à proximité de la source lumineuse (203).

12. Dispositif projecteur selon la revendication 10 et la revendication 6, **caractérisé en ce que** l'élément de contact relie un signal de masse présent sur une piste d'une carte électronique (216) du module complémentaire (202), et un fil au moins partiellement dénudé à l'intérieur de la liaison électrique (215) complémentaire, ledit fil étant fixé entre la férule (309) et la tresse métallique.

13. Dispositif projecteur selon l'une des revendications précédentes **caractérisé en ce que** au moins un élément de contact assure la mise en contact entre un élément métallique de blindage et un élément à la masse électrique d'un module électronique du module complémentaire (202).

14. Dispositif projecteur selon l'une au moins des revendications précédentes **caractérisé en ce que** chaque élément de blindage (306) coopère avec un élément de blindage additionnel disposé sur une contre-partie de connecteur destinée à recevoir le connecteur (210), de telle sorte qu'une continuité du blindage de chaque liaison électrique complémentaire (215) est assurée au niveau de zones de contact de la contre-partie de connecteur.

15. Dispositif projecteur selon l'une au moins des revendications précédentes **caractérisé en ce que** le connecteur (210) est disposé à la superficie ou à l'intérieur de l'élément projecteur (201).

16. Dispositif projecteur selon au moins une des revendications précédentes **caractérisé en ce que** le ou au moins un des éléments générateurs de perturbations électromagnétiques est choisi parmi une source lumineuse, un ballast, une carte électronique du type LCS.

17. Dispositif projecteur selon la revendication 3 **caractérisé en ce qu'il** prévoit des moyens assurant la continuité électrique enture les moyens de blindage (306) et le module complémentaire (202), notamment des moyens élastiques de type ressort.

18. Dispositif projecteur selon la revendication 3 ou 17 **caractérisé en ce qu'il** prévoit des moyens assurant la continuité électrique entre le module complémentaire (202) et une carte électronique (216) contenue dans ledit module.

19. Véhicule automobile équipé d'un dispositif projecteur selon l'une au moins des revendications précédentes.

## Claims

1. Headlight device comprising at least one complementary module (202) which receives an assembly of signals via a first electrical connection (213), and a headlight element (201) comprising at least one element (203) which generates electromagnetic disturbances, at least one of the elements (203) which generate electromagnetic disturbances being supplied via a distinct complementary electrical connection (215), the first electrical connection (213) and each complementary electrical connection (215) being connected to a single connector (210), **characterised in that** the connector (210) comprises a first series of areas of contact (301) of the first electrical connection (213), and at least one series of complementary areas of contact (303), each series of complementary areas of contact (303) being designed to receive one of the complementary electrical connections (215), the first series of areas of contact (301) of the first electrical connection (213) and/or at least one of the series of complementary areas of contact (303) being surrounded, separately from the other areas of contact, by electromagnetic shielding means (306).

2. Headlight device according to claim 1, **characterised in that** the connector (210) comprises a first series of areas of contact (301) of the first electrical connection (213), and at least one series of complementary areas of contact (303), each series of complementary areas of contact (303) being designed to receive one of the complementary electrical connections (215), only the series of complementary areas of contact (303) being surrounded separately by one or a plurality of electromagnetic shielding elements (306).

3. Headlight device according to one of the preceding claims, **characterised in that** the connector (210) is connected electrically to an electronic board (216) of a complementary module (202).

4. Headlight device according to one of the preceding claims, **characterised in that** each shielding element (306) consists of two or a plurality of half-shells (307-a; 307-b), which in particular are pressed into one another, or of a single shell.

5. Headlight device according to at least one of the preceding claims, **characterised in that** each shielding element (306) is secured to a braid or shielded metal sheath, or to a shielded cable, in order to constitute a shielded bundle containing the complementary electrical connection (215) received by the series of complementary areas of contact which is surrounded by the said shielding element (306).

6. Headlight device according to at least one of the preceding claims, **characterised in that** the securing between the shielding element (306) and the braid/ shielded metal sheath or the shielded cable, is provided by means of a ferule (309).

7. Headlight device according to at least one of the preceding claims, **characterised in that** the connector (210) is constituted by a plastic casing (300) comprising at least one part (305) which in particular is made of plastic, in which there are moulded cavities (304) which are designed to receive one of the series of complementary areas of contact (303) and an end of one of the complementary electrical connections (215), each part (305) being surrounded by one of the shielding elements (306).

8. Headlight device according to the preceding claim, **characterised in that** each shielding element (306) can be separated from the casing (300), which in particular is made of plastic.

9. Headlight device according to at least one of claims 1 to 6, **characterised in that** the connector (210) is constituted by a casing (300), which in particular is made of plastic, in the thickness of which each shielding element (306) is disposed, and in which there are moulded cavities (304) which are designed to receive the series of complementary areas of contact (303) and an end of the complementary electrical connections (215).

10. Headlight device according to at least one of the preceding claims, **characterised in that** it comprises a contact element, in order to assure continuity of shielding between each shielding element (306) and the complementary electrical connection (215) received by the series of complementary areas of contact which is surrounded by the said shielding element (306).

11. Headlight device according the preceding claim, **characterised in that** the element which generates electromagnetic disturbances, or one of them if there is a plurality of them (203), is a source of light, and **in that** the contact element connects an earthing signal which is present on a track of an electronic board (216) of the complementary module (202) and a wire which is at least partially stripped inside the complementary electrical connection (215) which supplies the source of light, the said wire reaching an end of the complementary electrical connection (215) which supplies the source of light, the said end being situated in the vicinity of the source of light (203).

12. Headlight device according to claim 10 and claim 6, **characterised in that** the contact element connects an earthing signal which is present on a track of an electronic board (216) of the complementary module (202) and a wire which is at least partially stripped inside the complementary electrical connection (215), the said wire being secured between the ferule (309) and the metal braid.

13. Headlight device according to one of the preceding claims, **characterised in that** at least one contact element assures the putting into contact between a metal shielding element and an electrical earthing element of an electronic module of the complementary module (202).

14. Headlight device according to at least one of the preceding claims, **characterised in that** each shielding element (306) co-operates with an additional shielding element which is disposed on a connector counterpart which is designed to receive the connector (210), such that continuity of the shielding of each complementary electrical connection (215) is assured at the level of areas of contact of the connector counterpart.

15. Headlight device according to at least one of the preceding claims, **characterised in that** the connector (210) is disposed on the surface of, or inside the headlight element (201).

16. Headlight device according to at least one of the preceding claims, **characterised in that** the, or at least one of the elements which generates electromagnetic disturbance is selected from amongst a source of light, a ballast, or an electronic board of the LCS type.

17. Headlight device according to claim 3, **characterised in that** it includes means which assure the electrical continuity between the shielding means (306) and the complementary module (202), and in particular resilient means of the spring type.

18. Headlight device according to claim 3 or 17, **characterised in that** it includes means which assure the electrical continuity between the complementary module (202) and an electronic board (216) which is contained in the said module.

19. Motor vehicle equipped with a headlight device according to at least one of the preceding claims.

## Patentansprüche

1. Scheinwerfer mit wenigstens einem Zusatzmodul (202), das über eine erste elektrische Verbindung (213) eine Reihe von Signalen empfängt, und einem Scheinwerferelement (201), das wenigstens ein elektromagnetische Störungen erzeugendes Element (203) umfasst, wobei wenigstens eines der elektromagnetische Störungen erzeugenden Elemente (203) über eine separate zusätzliche elektrische Verbindung (215) gespeist wird, wobei die erste elektrische Verbindung (213) und jede zusätzliche elektrische Verbindung (215) an einen einzigen Verbinder (210) angeschlossen sind,
**dadurch gekennzeichnet, dass** der Verbinder (210) eine erste Gruppe von Kontaktbereichen (301) der ersten elektrischen Verbindung (213) und wenigstens eine Gruppe zusätzlicher Kontaktbereiche (303) aufweist, wobei jede Gruppe zusätzlicher Kontaktbereiche (303) zur Aufnahme einer der zusätzlichen elektrischen Verbindungen (215) bestimmt ist, wobei die erste Gruppe von Kontaktbereichen (301) der ersten elektrischen Verbindung (213) und/oder wenigstens eine der Gruppen zusätzlicher Kontaktbereiche (303) in von den anderen Kontaktbereichen getrennter Form von elektromagnetischen Abschirmmitteln (306) umgeben ist.

2. Scheinwerfer nach Anspruch 1,
**dadurch gekennzeichnet, dass** der Verbinder (210) eine erste Gruppe von Kontaktbereichen (301) der ersten elektrischen Verbindung (213) und wenigstens eine Gruppe zusätzlicher Kontaktbereiche (303) aufweist, wobei jede Gruppe zusätzlicher Kontaktbereiche (303) zur Aufnahme von einem der zusätzlichen elektrischen Verbinder (215) bestimmt ist, wobei nur die Gruppen zusätzlicher Kontaktbereiche (303) in getrennter Form von einem oder mehreren elektromagnetischen Abschirmelementen (306) umgeben ist bzw. sind.

3. Scheinwerfer nach einem der vorhergehenden Ansprüche,
**dadurch gekennzeichnet, dass** der Verbinder (210) elektrisch mit einer elektronischen Platine (216) eines Zusatzmoduls (202) verbunden ist.

4. Scheinwerfer nach einem der vorhergehenden Ansprüche,
**dadurch gekennzeichnet, dass** jedes Abschirmelement (306) aus zwei oder mehreren insbesondere ineinandergesteckten Schalenhälften (307-a; 307-b) oder einer einzigen Schale gebildet ist.

5. Scheinwerfer nach wenigstens einem der vorhergehenden Ansprüche,
**dadurch gekennzeichnet, dass** jedes Abschirmelement (306) an einem abgeschirmten Metallgeflecht bzw. einer abgeschirmten Metallummantelung oder an einem abgeschirmten Kabel zum Bilden eines abgeschirmten Kabelstrangs befestigt ist, der die zusätzliche elektrische Verbindung (215) umfasst, die von der Gruppe zusätzlicher Kontaktbereiche, die von dem Abschirmelement (306) umgeben ist, aufgenommen wird.

6. Scheinwerfer nach wenigstens einem der vorhergehenden Ansprüche,
**dadurch gekennzeichnet, dass** die Befestigung zwischen dem Abschirmelement (306) und dem abgeschirmten Metallgeflecht bzw. der abgeschirmten Metallummantelung oder dem abgeschirmten Kabel mittels einer Hülse (309) erfolgt.

7. Scheinwerfer nach wenigstens einem der vorhergehenden Ansprüche,
**dadurch gekennzeichnet, dass** der Verbinder (210) von einem Kunststoffgehäuse (300) gebildet ist, das wenigstens ein insbesondere aus Kunststoff bestehendes Teil (305) umfasst, in dem Höhlungen (304) geformt sind, die zur Aufnahme einer der Gruppen zusätzlicher Kontaktbereiche (303) und von einem Ende einer der zusätzlichen elektrischen Verbindungen (215) bestimmt sind, wobei jedes Teil (305) von einem der Abschirmelemente (306) umgeben ist.

8. Scheinwerfer nach dem vorhergehenden Anspruch,
**dadurch gekennzeichnet, dass** jedes Abschirmelement (306) von dem insbesondere aus Kunststoff bestehenden Gehäuse (300) trennbar ist.

9. Scheinwerfer nach wenigstens einem der Ansprüche 1 bis 6,
**dadurch gekennzeichnet, dass** der Verbinder (210) von einem insbesondere aus Kunststoff bestehenden Gehäuse (300) gebildet ist, in dessen Dicke jedes Abschirmelement (306) angeordnet ist und in dem Höhlungen (304) geformt sind, die zur Aufnahme der Gruppen zusätzlicher Kontaktbereiche (303) und von einem Ende der zusätzlichen elektrischen Verbinder (215) bestimmt sind.

10. Scheinwerfer nach wenigstens einem der vorhergehenden Ansprüche,
**dadurch gekennzeichnet, dass** er ein Kontaktelement umfasst, um zwischen jedem Abschirmelement (306) und der zusätzlichen elektrischen Verbindung (215), die von der Gruppe zusätzlicher Kontaktbereiche, welche von dem Abschirmelement (306) umgeben sind, aufgenommen wird, eine durchgehende Abschirmung zu gewährleisten.

11. Scheinwerfer nach dem vorhergehenden Anspruch,
**dadurch gekennzeichnet, dass** das elektromagnetische Störungen erzeugende Element (203) oder eines von ihnen, falls mehrere vorhanden sind, eine Lichtquelle ist, und dass das Kontaktelement ein auf einer Leiterbahn einer elektronischen Platine (216) des Zusatzmoduls (202) vorhandenes Massesignal und einen wenigstens zum Teil blanken Draht innen in der die Lichtquelle speisenden zusätzlichen elektrischen Verbindung (215) miteinander verbindet, wobei der Draht bis zu einem Ende der die Lichtquelle speisenden zusätzlichen elektrischen Verbindung (215) reicht, wobei das Ende in der Nähe der Lichtquelle (203) liegt.

12. Scheinwerfer nach Anspruch 10 und Anspruch 6,
**dadurch gekennzeichnet, dass** das Kontaktelement ein auf einer Leiterbahn einer elektronischen Platine (216) des Zusatzmoduls (202) vorhandenes Massesignal und einen wenigstens zum Teil blanken Draht innen in der zusätzlichen elektrischen Verbindung (215) miteinander verbindet, wobei der Draht zwischen der Hülse (309) und dem Metallgeflecht befestigt ist.

13. Scheinwerfer nach einem der vorhergehenden Ansprüche,
**dadurch gekennzeichnet, dass** wenigstens ein Kontaktelement die Herstellung der Verbindung zwischen einem Metallabschirmelement und einem elektrischen Masseelement eines elektronischen Moduls des Zusatzmoduls (202) gewährleistet.

14. Scheinwerfer nach wenigstens einem der vorhergehenden Ansprüche,
**dadurch gekennzeichnet, dass** jedes Abschirmelement (306) mit einem zusätzlichen Abschirmelement zusammenwirkt, das auf einem Verbindergegenstück, welches zur Aufnahme des Verbinders (210) bestimmt ist, so angeordnet ist, dass eine durchgehende Abschirmung jeder zusätzlichen elektrischen Verbindung (215) in Höhe der Kontaktbereiche des Verbindergegenstücks gewährleistet ist.

15. Scheinwerfer nach wenigstens einem der vorhergehenden Ansprüche,
**dadurch gekennzeichnet, dass** der Verbinder (210) auf der Oberfläche oder im Inneren des Scheinwerferelements (201) angeordnet ist.

16. Scheinwerfer nach wenigstens einem der vorhergehenden Ansprüche,
**dadurch gekennzeichnet, dass** das oder wenigstens eines der elektromagnetische Störungen erzeugenden Elemente ausgewählt ist aus einer Lichtquelle, einem Vorschaltgerät, einer elektronischen Platine vom Typ LCS.

17. Scheinwerfer nach Anspruch 3,
**dadurch gekennzeichnet, dass** Mittel vorgesehen sind, die zwischen den Abschirmmitteln (306) und dem Zusatzmodul (202) die elektrische Kontinuität gewährleisten, insbesondere elastische Mittel vom Typ Feder.

18. Scheinwerfer nach Anspruch 3 oder 17,
**dadurch gekennzeichnet, dass** Mittel vorgesehen sind, die zwischen dem Zusatzmodul (202) und einer in dem Modul enthaltenen elektronischen Platine (216) die elektrische Kontinuität gewährleisten.

19. Kraftfahrzeug, ausgestattet mit einem Scheinwerfer nach wenigstens einem der vorhergehenden Ansprüche.
